(19) Europäisches Patentamt / European Patent Office / Office européen des brevets

(11) **EP 1 937 555 B1**

(12) **FASCICULE DE BREVET EUROPEEN**

(45) Date de publication et mention
de la délivrance du brevet:
**02.09.2009   Bulletin 2009/36**

(21) Numéro de dépôt: **06808116.5**

(22) Date de dépôt: **13.09.2006**

(51) Int Cl.:
**B64D 31/00** *(2006.01)*    **F02C 9/28** *(2006.01)*

(86) Numéro de dépôt international:
**PCT/FR2006/002090**

(87) Numéro de publication internationale:
**WO 2007/034049 (29.03.2007 Gazette 2007/13)**

(54) **PROCEDE ET DISPOSITIF POUR FOURNIR A UN PILOTE D'UN AERONEF MULTIMOTEUR DES INFORMATIONS RELATIVES AUXDITS MOTEURS**

VERFAHREN UND VORRICHTUNG ZUR VERSORGUNG EINES PILOTEN EINES FLUGZEUGS MIT MEHREREN TRIEBWERKEN MIT DATEN ÜBER DIESE TRIEBWERKE

METHOD AND DEVICE FOR PROVIDING A MULTI-ENGINE AIRCRAFT PILOT WITH DATA CONCERNING SAID ENGINES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.09.2005   FR 0509700**

(43) Date de publication de la demande:
**02.07.2008   Bulletin 2008/27**

(73) Titulaire: **Airbus**
**31700 Blagnac Cédex (FR)**

(72) Inventeur: **REMY, Sébastien**
**F-31220 Cazeres (FR)**

(74) Mandataire: **Hauer, Bernard**
**Bloch & Bonnétat**
**23bis, rue de Turin**
**75008 Paris (FR)**

(56) Documents cités:
**US-A- 3 721 120        US-A- 5 142 860**
**US-A1- 2004 267 414**

**Description**

La présente invention concerne un procédé et un dispositif pour fournir à un pilote d'un aéronef qui est muni d'une pluralité de moteurs, des informations relatives aux moteurs dudit aéronef.

Plus précisément, la présente invention a pour objet de fournir des informations relatives à la puissance maximale que les moteurs de l'aéronef peuvent délivrer pour des conditions extérieures (température, altitude) particulières.

On sait qu'à chaque moteur est associée pour chaque régime certifié une poussée maximale, en particulier une poussée maximale de décollage dite "jour froid". Cette poussée maximale est maintenue jusqu'à une température extérieure fictive appelée "point de cassure". Pour surveiller un moteur, on tient généralement compte, en plus de cette poussée maximale, d'une température d'échappement des gaz de type EGT ("Exhaust Gas Temperature" en anglais) qui représente la température des gaz au niveau de la turbine basse pression du moteur. Au-delà du point de cassure, pour chaque régime certifié, cette température (EGT) est maintenue constante, ce qui correspond à une poussée moteur qui décroît quand la température extérieure augmente. Cette température (EGT) est mesurée par l'intermédiaire d'une sonde et est utilisée pour surveiller la détérioration du moteur en service. A cet effet, une valeur limite de température (connue sous l'expression "red line" en anglais, c'est-à-dire ligne rouge) est définie lors des essais de certification du moteur et est déclarée aux autorités de certification. Quand un moteur en service atteint cette valeur limite de température, il doit être déposé pour être remis en condition, ou si cela est possible, être reprogrammé pour un régime certifié inférieur, correspondant à une température d'échappement des gaz inférieure, ce qui a pour conséquence bien entendu de faire baisser la poussée maximale que le moteur peut alors fournir.

Par ailleurs, on connaît :

- par le document US-2004/0267414 A, un système de contrôle de moteurs d'un aéronef. Selon ce document, des ensembles de données tridimensionnelles, limitant la poussée maximale par rapport à certains paramètres du moteur, sont établis. Des températures ambiantes sont utilisées dans ces ensembles, et l'un de ces paramètres est la température d'échappement des gaz. De plus, la poussée est choisie pour garantir qu'aucun paramètre ne soit dépassé ;
- par le document US-3 721 120 A, un indicateur de performances de moteurs. Ce document prend en compte la dépendance entre la température d'échappement des gaz, la température ambiante et l'altitude. Ces informations sont utilisées pour calculer une température attendue d'échappement des gaz qui est comparée à une température mesurée, afin de déterminer des caractéristiques d'un moteur ; et
- par le document US-5 142 860 A, un système de contrôle d'un moteur. Ce document prévoit de calculer une limite variable de la température d'admission de la turbine soufflante, afin notamment de prolonger la durée de service du moteur.

La présente invention a pour objet de remédier aux inconvénients précités. Elle concerne un procédé pour fournir à un pilote d'un aéronef qui est muni d'une pluralité de moteurs, des informations relatives aux moteurs dudit aéronef, permettant de remédier auxdits inconvénients.

A cet effet, selon l'invention, ledit procédé est remarquable en ce que :

a) on détermine l'altitude effective et la température extérieure effective d'un aéroport sur lequel se trouve ledit aéronef ;

b) pour chacun des moteurs dudit aéronef, on détermine, à l'aide de ladite altitude effective et de ladite température extérieure effective, une limite de température ambiante pour laquelle le moteur fournit une poussée maximale prédéterminée (la poussée maximale de décollage jour froid précitée) s'il fonctionne à une valeur limite prédéterminée de température d'échappement des gaz (la valeur "red line" précitée) ;

c) si la limite de température ambiante est inférieure à la température d'un point de cassure et inférieure à la température extérieure, on détermine, pour chacun des moteurs de l'aéronef, une température flexible minimale individuelle T1, à l'aide de l'expression suivante :

$$T1 = T2 + T3 - T4$$

dans laquelle :

- ■ T2 est ladite température extérieure effective, déterminée à l'étape a);
- ■ T3 est ladite température du point de cassure ; et
- ■ T4 est ladite limite de température ambiante, déterminée à l'étape b) ; et

d) à partir des températures flexibles minimales individuelles ainsi déterminées pour tous les moteurs de l'aéronef, on détermine une température flexible minimale globale.

De façon avantageuse, dans une étape supplémentaire, on détermine, à partir de ladite température flexible minimale globale déterminée à l'étape d), une poussée maximale disponible illustrant la poussée maximale que les moteurs de l'aéronef sont en mesure de fournir au niveau dudit aéroport à ladite température extérieure effective.

Ainsi, grâce à l'invention, le pilote dispose de la poussée maximale que les différents moteurs de l'aéronef peuvent fournir un jour donné sur un aéroport donné.

De plus, avantageusement, dans une étape supplémentaire, on présente à un pilote de l'aéronef, au moins sur un écran de visualisation, au moins la température flexible minimale globale déterminée à l'étape d), et éventuellement ladite poussée maximale disponible.

En outre, de façon avantageuse, dans une étape supplémentaire :

- on compare ladite température flexible minimale globale déterminée à l'étape d) à une température flexible, sélectionnée par un pilote de l'aéronef en vue de la régulation des moteurs dudit aéronef ; et
- on vérifie que cette température flexible reste supérieure à ladite température flexible minimale globale.

On sait qu'une telle température flexible est entrée par le pilote dans le système de régulation du moteur et a pour but de faire croire au moteur qu'il fonctionne à une température ambiante extérieure plus chaude que la température effective, ce qui a pour conséquence de faire baisser la poussée du moteur et donc sa température de fonctionnement.

Dans un mode de réalisation préféré, à l'étape b), on détermine, pour chacun des moteurs de l'aéronef, la limite de température ambiante comme la température extérieure fictive pour laquelle, à la poussée maximale, la température d'échappement des gaz est égale à sa valeur limite.

Par ailleurs, de façon avantageuse, à l'étape d), pour déterminer la température flexible minimale globale :

- on compare entre elles les différentes températures flexibles minimales individuelles ; et
- on sélectionne, comme température flexible minimale globale, la température flexible minimale individuelle la plus élevée (correspondant donc à la poussée moteur la plus faible).

Ainsi, on est sûr de ne dépasser la valeur limite précitée ("red line") sur aucun des moteurs de l'aéronef.

La présente invention concerne également un dispositif pour fournir à un pilote d'un aéronef qui est muni d'une pluralité de moteurs, des informations relatives aux moteurs dudit aéronef, par exemple un avion de transport.

Selon l'invention, ledit dispositif est remarquable en ce qu'il comporte :

- des premiers moyens pour déterminer l'altitude effective et la température extérieure effective d'un aéroport sur lequel se trouve ledit aéronef ;
- une pluralité de deuxièmes moyens, dont chacun est formé de manière à déterminer, pour l'un des moteurs dudit aéronef auquel il est associé, à l'aide de ladite altitude effective et de ladite température extérieure effective, une limite de température ambiante pour laquelle le moteur fournit une poussée maximale prédéterminée s'il fonctionne à une valeur limite prédéterminée de température d'échappement des gaz ;
- une pluralité de troisièmes moyens, dont chacun est formé de manière à déterminer, pour l'un desdits moteurs auquel il est associé, si la limite de température ambiante est inférieure à la température d'un point de cassure et inférieure à la température extérieure, une température flexible minimale individuelle T1, et ceci à l'aide de l'expression suivante :

$$T1 = T2 + T3 - T4$$

dans laquelle :

- T2 est ladite température extérieure ;
- T3 est la température du point de cassure ; et
- T4 est ladite limite de température ambiante ; et

- des quatrièmes moyens pour déterminer une température flexible minimale globale, à partir des températures flexibles minimales individuelles ainsi déterminées pour tous les moteurs de l'aéronef.

Dans un mode de réalisation particulier, ledit dispositif comporte de plus :

- des cinquièmes moyens pour déterminer, à l'aide de ladite température flexible minimale globale, une poussée maximale disponible illustrant la poussée maximale que les moteurs de l'aéronef sont en mesure de fournir au niveau dudit aéroport à ladite température extérieure effective ; et/ou
- des sixièmes moyens pour présenter à un pilote de l'aéronef, au moins sur un écran de visualisation, au moins la température flexible minimale globale déterminée par lesdits quatrièmes moyens.

Dans un mode de réalisation préféré, les deuxième et troisième moyens associés à au moins l'un desdits moteurs font partie d'une unité de régulation dudit moteur.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 illustre schématiquement une partie des informations obtenues grâce à un dispositif conforme à l'invention sur un avion bimoteur.

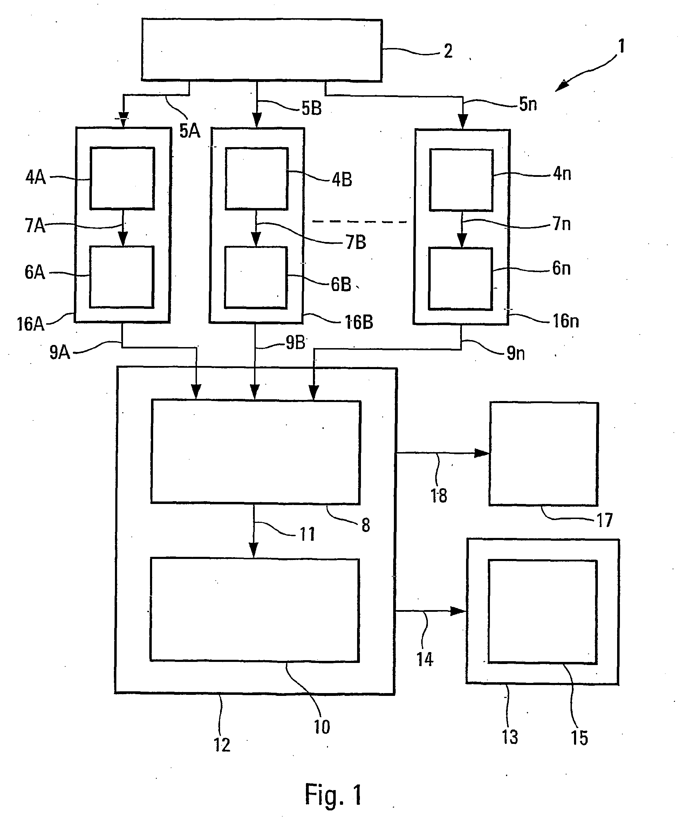

Le dispositif 1 conforme à l'invention et représenté schématiquement sur la figure 1 est destiné à fournir à un pilote d'un aéronef A qui est muni d'une pluralité de moteurs 3A, 3B, ..., 3n, par exemple un avion de transport bimoteur ou quadrimoteur, des informations relatives aux moteurs 3A, 3B, ..., 3n dudit aéronef A.

Pour ce faire, ledit dispositif 1 comporte, selon l'invention :

- un ensemble 2 de moyens usuels pour déterminer :

    ■ d'une part, l'attitude effective de l'aéroport (non représenté) sur lequel se trouve ledit aéronef A ; et
    ■ d'autre part, la température extérieure effective sur ledit aéroport ;

- une pluralité de moyens 4A, 4B, ..., 4n, dont chacun est associé à l'un des moteurs 3A, 3B, ..., 3n de l'aéronef A et est relié respectivement par l'intermédiaire de liaisons 5A, 5B, 5n audit ensemble 2. Chacun desdits moyens 4A, 4B, ..., 4n est formé de manière à déterminer pour le moteur auquel il est associé, à l'aide des informations (altitude effective et température extérieure effective) reçues dudit ensemble 2, une limite de température ambiante dite "OATL" (pour "Outside Air Temperature Limit" en anglais) pour laquelle le moteur associé fournit une poussée maximale prédéterminée (la poussée maximale usuelle de décollage jour froid) s'il fonctionne à une valeur limite prédéterminée de EGT (la valeur limite usuelle dite "red line") ;
- une pluralité de moyens 6A, 6B, ..., 6n, dont chacun est associé à l'un desdits moteurs 3A, 3B, ..., 3n et est relié par l'intermédiaire d'une liaison 7A, 7B, ..., 7n à l'un desdits moyens 4A, 4B, ..., 4n. Chacun desdits moyens 6A, 6B, ..., 6n est formé de manière à déterminer pour le moteur auquel il est associé, à partir de la limite de température ambiante correspondante reçue du moyen 4A, 4B, ..., 4n auquel il est relié, une température flexible minimale individuelle pour le moteur 3A, 3B, ..., 3n associé ; et
- des moyens 8 pour déterminer une température flexible minimale globale, à partir des températures flexibles minimales individuelles reçues desdits moyens 6A, 6B, ..., 6n par l'intermédiaire de liaisons 9A, 9B, ..., 9n.

En outre, dans un mode de réalisation préféré, ledit dispositif 1 comporte, de plus, des moyens 10 :

- qui sont reliés par l'intermédiaire d'une liaison 11 auxdits moyens 8 ; et
- qui sont formés de manière à déterminer, à l'aide de la température flexible minimale globale reçue desdits moyens 8, une poussée maximale disponible illustrant la poussée maximale que les moteurs 3A, 3B, ..., 3n de l'aéronef A sont en mesure de fournir au niveau dudit aéroport à ladite température extérieure effective.

Ainsi, grâce au dispositif 1 conforme à l'invention, le pilote de l'aéronef A dispose de la poussée maximale que les différents moteurs 3A, 3B, ..., 3n, de l'aéronef A peuvent fournir un jour donné sur un aéroport donné.

On notera de plus que, grâce à l'invention, la poussée maximale disponible évolue continûment, ce qui permet à une compagnie aérienne de maximiser la performance opérationnelle de ses avions.

Dans un mode de réalisation particulier, lesdits moyens 8 et 10 peuvent être regroupés dans une unité centrale 12.

En outre, dans un mode de réalisation préféré, ledit dispositif 1 comporte, de plus, des moyens d'affichage 13 qui sont par exemple reliés par l'intermédiaire d'une liaison 14 à ladite unité centrale 12 et qui sont susceptibles de présenter, sur au moins un écran de visualisation 15 de l'aéronef A, des informations issues de ladite unité centrale 12, et en particulier la température flexible minimale globale déterminée par lesdits moyens 8. Bien entendu, lesdits moyens d'affichage 13 peuvent également présenter d'autres informations au pilote de l'aéronef A, et notamment la poussée maximale disponible déterminée par lesdits moyens 10.

Par ailleurs, dans un mode de réalisation préféré, lesdits moyens 4A, 4B, 4n déterminent la limite de température ambiante (limite "OATL" précitée) à chaque fois de la façon suivante :

- à poussée maximale de décollage "jour froid" constante, la température EGT d'échappement des gaz augmente avec la température extérieure ;
- par extrapolation de cette caractéristique, la limite OATL est la température extérieure fictive pour laquelle, à la poussée maximale de décollage "jour froid", la température EGT est égale à la valeur limite précitée dite "red line".

En outre, lesdits moyens 6A, 6B, 6n déterminent la température flexible minimale individuelle à chaque fois de la façon suivante :

- si la limite OATL est supérieure ou égale au point de cassure, il n'y a pas de température flexible minimale individuelle, et le moteur peut fournir la poussée maximale du régime certifié considéré pour les conditions extérieures du jour ; et
- si la limite OATL est inférieure au point de cassure, la température flexible minimale individuelle est obtenue de la façon suivante :

  ■ si la température extérieure est inférieure ou égale à la limite OATL, il n'y a pas de température flexible minimale individuelle, et le moteur peut fournir la poussée maximale du régime certifié considéré pour les conditions extérieures du jour ; et
  ■ si la température extérieure est supérieure à la limite OATL, la température flexible minimale individuelle s'obtient à l'aide de l'expression suivante :

$$\text{température flexible minimale individuelle} =$$

$$\text{température extérieure} + \text{température du point de cassure} - \text{limite OATL.}$$

Dans un mode de réalisation particulier, les moyens 4A, 4B, 4n et les moyens 6A, 6B, 6n qui sont associés à un même moteur 3A, 3B, 3n sont, à chaque fois, intégrés dans une unité de régulation usuelle 16A, 16B, 16n dudit moteur 3A, 3B, 3n.

Par ailleurs, pour déterminer la température flexible minimale globale, lesdits moyens 8 :

- comparent automatiquement entre elles les différentes températures flexibles minimales individuelles reçues-; et
- sélectionnent automatiquement, comme température flexible minimale globale, la température flexible minimale individuelle la plus élevée (correspondant donc à la poussée moteur la plus faible).

Ainsi, on est sûr de ne dépasser la valeur limite précitée ("red line") sur aucun des moteurs 3A, 3B, 3n de l'aéronef A.

Il est également envisageable, pour déterminer la température flexible minimale globale, que le dispositif 1 affiche les différentes températures flexibles minimales individuelles sur un écran de visualisation, par exemple sur l'écran de visualisation 15, et que le pilote sélectionne alors la température flexible minimale globale et en informe ledit dispositif 1 à l'aide d'un élément approprié (par exemple un clavier d'ordinateur) qui fait de préférence partie desdits moyens 8.

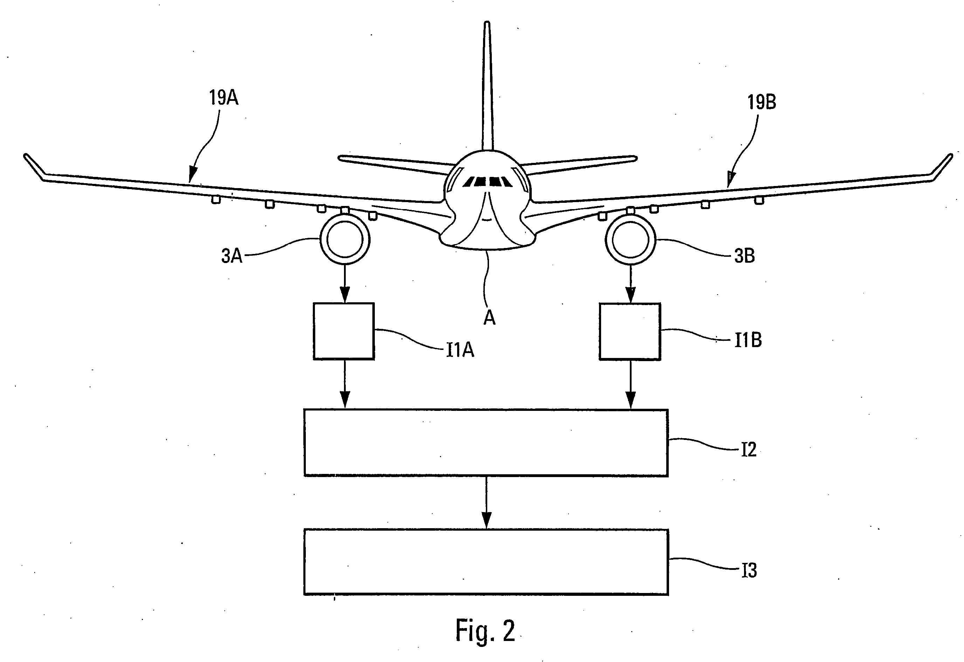

Sur la figure 2, on a représenté une partie des informations obtenues grâce à l'invention sur l'exemple d'un avion A muni de deux moteurs 3A et 3B agencés sur ses ailes 19A et 19B, à savoir :

- pour chacun desdits moteurs 3A et 3B, des informations I1A, I1B qui correspondent respectivement aux températures flexibles minimales individuelles engendrées par les unités de régulation 16A et 16B associées ;
- une information I2 représentant la température flexible minimale globale pour tout l'avion A, déterminée par les moyens 8 ; et
- une information I3 (déterminée par les moyens 10) représentant la performance maximale disponible sur l'avion A au jour donné avec ces deux moteurs 3A et 3B.

Par ailleurs, dans un mode de réalisation particulier, ledit dispositif 1 comporte, de plus, des moyens 17 qui sont par exemple reliés par l'intermédiaire d'une liaison 18 à ladite unité centrale 12 et qui sont destinés :

- à comparer ladite température flexible minimale globale déterminée par les moyens 8 à une température flexible, sélectionnée par un pilote de l'aéronef A en vue de la régulation des moteurs 3A, 3B, 3n dudit aéronef A ; et

- à vérifier que cette température flexible reste supérieure à ladite température flexible minimale globale.

On sait qu'une telle température flexible qui est entrée par le pilote dans le système de régulation de chaque moteur 3A, 3B, 3n a pour but de faire croire au moteur 3A, 3B, 3n qu'il fonctionne à une température ambiante extérieure plus chaude que la température effective, ce qui a pour conséquence de faire baisser la poussée du moteur 3A, 3B, 3n et donc sa température de fonctionnement.

On notera de plus que, grâce au dispositif 1 conforme à l'invention, un moteur reste en service plus longtemps avant d'être déposé, ce qui permet aux compagnies aériennes une exploitation plus longue dans les meilleures conditions de fonctionnement.

**Revendications**

1. Procédé pour fournir à un pilote d'un aéronef (A) qui est muni d'une pluralité de moteurs (3A, 3B), des informations relatives aux moteurs (3A, 3B) dudit aéronef (A),
   **caractérisé en ce que :**

   a) on détermine l'altitude effective et la température extérieure effective d'un aéroport sur lequel se trouve ledit aéronef (A) ;
   b) pour chacun des moteurs (3A, 3B) dudit aéronef (A), on détermine, à l'aide de ladite altitude effective et de ladite température extérieure effective, une limite de température ambiante pour laquelle le moteur (3A, 3B) fournit une poussée maximale prédéterminée s'il fonctionne à une valeur limite prédéterminée de température d'échappement des gaz ;
   c) si la limite de température ambiante est inférieure à la température d'un point de cassure et inférieure à la température extérieure, on détermine, pour chacun des moteurs (3A, 3B) de l'aéronef, une température flexible minimale individuelle T1, à l'aide de l'expression suivante :

$$T1 = T2 + T3 - T4$$

   dans laquelle :

   ■ T2 est ladite température extérieure effective, déterminée à l'étape a);
   ■ T3 est ladite température du point de cassure ; et
   ■ T4 est ladite limite de température ambiante, déterminée à l'étape b) ; et

   d) à partir des températures flexibles minimales individuelles ainsi déterminées pour tous les moteurs (3A, 3B) de l'aéronef (A), on détermine une température flexible minimale globale.

2. Procédé selon la revendication 1,
   **caractérisé en ce que**, dans une étape supplémentaire, on détermine, à partir de ladite température flexible minimale globale déterminée à l'étape d), une poussée maximale disponible illustrant la poussée maximale que les moteurs (3A, 3B) de l'aéronef (A) sont en mesure de fournir au niveau dudit aéroport à ladite température extérieure effective.

3. Procédé selon l'une des revendications 1 et 2,
   **caractérisé en ce que,** dans une étape supplémentaire, on présente à un pilote de l'aéronef (A), au moins sur un écran de visualisation (15), au moins la température flexible minimale globale déterminée à l'étape d).

4. Procédé selon l'une quelconque des revendications précédentes, **caractérisé en ce que,** dans une étape supplémentaire :

   - on compare ladite température flexible minimale globale déterminée à l'étape d) à une température flexible minimale fictive, sélectionnée par un pilote de l'aéronef (A) en vue de la régulation des moteurs (3A, 3B) dudit aéronef (A) ; et
   - on vérifie que cette température flexible reste supérieure à ladite température flexible minimale globale.

**5.** Procédé selon l'une quelconque des revendications précédentes, **caractérisé en ce qu'**à l'étape b), on détermine, pour chacun des moteurs (3A, 3B) de l'aéronef (A), la limite de température ambiante comme la température extérieure fictive pour laquelle, à la poussée maximale, la température d'échappement des gaz est égale à sa valeur limite.

**6.** Procédé selon l'une quelconque des revendications précédentes, **caractérisé en ce qu'**à l'étape d), pour déterminer la température flexible minimale globale :

- on compare entre elles les différentes températures flexibles minimales individuelles ; et
- on sélectionne, comme température flexible minimale globale, la température flexible minimale individuelle la plus élevée.

**7.** Dispositif pour fournir à un pilote d'un aéronef (A) qui est muni d'une pluralité de moteurs (3A, 3B), des informations relatives aux moteurs (3A, 3B) dudit aéronef (A),
**caractérisé en ce qu'**il comporte :

- des premiers moyens (2) pour déterminer l'altitude effective et la température extérieure effective d'un aéroport sur lequel se trouve ledit aéronef (A) ;
- une pluralité de deuxièmes moyens (4A, 4B, 4n), dont chacun est formé de manière à déterminer, pour l'un des moteurs (3A, 3B) dudit aéronef (A) auquel il est associé, à l'aide de ladite altitude effective et de ladite température extérieure effective, une limite de température ambiante pour laquelle le moteur (3A, 3B) fournit une poussée maximale prédéterminée s'il fonctionne à une valeur limite prédéterminée de température d'échappement des gaz ;
- une pluralité de troisièmes moyens (6A, 6B, 6n), dont chacun est formé de manière à déterminer, pour l'un desdits moteurs (3A, 3B) auquel il est associé, si la limite de température ambiante est inférieure à la température d'un point de cassure et inférieure à la température extérieure, une température flexible minimale individuelle T1, et ceci à l'aide de l'expression suivante :

$$T1 = T2 + T3 - T4$$

dans laquelle :

- ■ T2 est ladite température extérieure effective ;
- ■ T3 est la température du point de cassure ; et
- ■ T4 est ladite limite de température ambiante ; et

- des quatrièmes moyens (8) pour déterminer une température flexible minimale globale, à partir des températures flexibles minimales individuelles ainsi déterminées pour tous les moteurs (3A, 3B) de l'aéronef (A).

**8.** Dispositif selon la revendication 7,
**caractérisé en ce qu'**il comporte, de plus, des cinquièmes moyens (10) pour déterminer, à l'aide de ladite température flexible minimale globale, une poussée maximale disponible illustrant la poussée maximale que les moteurs (3A, 3B) de l'aéronef (A) sont en mesure de fournir au niveau dudit aéroport à ladite température extérieure effective.

**9.** Dispositif selon l'une des revendications 7 et 8,
**caractérisé en ce qu'**il comporte, de plus, des sixièmes moyens (13) pour présenter à un pilote de l'aéronef (A), au moins sur un écran de visualisation (15), au moins la température flexible minimale globale déterminée par lesdits quatrièmes moyens (8).

**10.** Dispositif selon l'une quelconque des revendications 7 à 9,
**caractérisé en ce que** les deuxième et troisième moyens associés à au moins l'un desdits moteurs font partie d'une unité de régulation (16A, 16B, 16n) dudit moteur (3A, 3B).

**11.** Aéronef muni d'une pluralité de moteurs (3A, 3B),
**caractérisé en ce qu'**il comporte un dispositif (1) tel que celui spécifié sous l'une quelconque des revendications 7 à 10.

**Claims**

1. A method for providing a pilot of an aircraft (A) which is fitted with a number of engines (3A, 3B) with information relating to the engines (3A, 3B) of said aircraft (A),
**characterized in that:**

  a) the actual altitude and the actual outside air temperature of an airport at which said aircraft (A) is located are determined;
  b) for each of the engines (3A, 3B) of said aircraft (A), said actual altitude and said actual outside air temperature are used to determine an outside air temperature limit for which the engine (3A, 3B) provides a predetermined maximum thrust if operating at a predetermined exhaust gas temperature limit;
  c) if the outside air temperature limit is below a breakpoint temperature and below the outside air temperature, an individual minimum flexible temperature T1 is determined for each of the engines (3A, 3B) of the aircraft, using the following expression:

$$T1 = T2 + T3 - T4$$

  in which:

    - T2 is said actual outside air temperature, determined at step a);
    - T3 is said breakpoint temperature; and
    - T4 is said outside air temperature limit, determined at step b); and

  d) from the individual minimum flexible temperatures thus determined for all the engines (3A, 3B) of the aircraft (A), an overall minimum flexible temperature is determined.

2. The method as claimed in claim 1,
**characterized in that,** in an additional step, said overall minimum flexible temperature determined in step d) is used to calculate a maximum available thrust illustrating the maximum thrust that the engines (3A, 3B) of the aircraft (A) are able to supply at said airport at said actual outside air temperature.

3. The method as claimed in one of claims 1 and 2,
**characterized in that,** in an additional step, a pilot of the aircraft (A) is presented, at least on a display screen (15) with at least the overall minimum flexible temperature determined in step d).

4. The method as claimed in any one of the preceding claims, **characterized in that**, in an additional step:

  - said overall minimum flexible temperature determined in step d) is compared with an assumed minimum flexible temperature, selected via a pilot of the aircraft (A) in order to set the engines (3A, 3B) of said aircraft (A); and
  - a check is carried out to verify that this flexible temperature remains higher than said overall minimum flexible temperature.

5. The method as claimed in any one of the preceding claims, **characterized in that** in step b), the outside air temperature limit is determined, for each of the engines (3A, 3B) of the aircraft (A) as the assumed outside air temperature at which, at maximum thrust, the exhaust gas temperature is equal to its limit value.

6. The method as claimed in any one of the preceding claims, **characterized in that** in step d), in order to determine the overall minimum flexible temperature:

  - the various individual minimum flexible temperatures are compared with one another; and
  - the highest individual minimum flexible temperature is selected to be the overall minimum flexible temperature.

7. A device for providing a pilot of an aircraft (A) which is fitted with a number of engines (3A, 3B) with information relating to the engines (3A, 3B) of said aircraft (A),
**characterized in that** it comprises:

- first means (2) for determining the actual altitude and the actual outside air temperature of an airport at which said aircraft (A) is located;
- a plurality of second means (4A, 4B, 4n) each of which is formed in such a way as to determine, in respect of that one of the engines (3A, 3B) of said aircraft (A) with which it is associated, and using said actual altitude and said actual outside air temperature, an outside air temperature limit for which the engine (3A, 3B) provides a predetermined maximum thrust if operating at a predetermined exhaust gas temperature limit;
- a plurality of third means (6A, 6B, 6n) each of which is formed in such a way as to determine, in respect of that one of said engines (3A, 3B) with which it is associated, if the outside air temperature limit is below a breakpoint temperature and below the outside air temperature, an individual minimum flexible temperature T1, using the following expression:

$$T1 = T2 + T3 + T4$$

in which:

    - T2 is said outside air temperature;
    - T3 is a breakpoint temperature; and
    - T4 is said outside air temperature limit; and
    - fourth means (8) for determining an overall minimum flexible temperature from the individual minimum flexible temperatures thus determined for all the engines (3A, 3B) of the aircraft (A).

8. The device as claimed in claim 7,
   **characterized in that** it additionally comprises fifth means (10) for determining, using said overall minimum flexible temperature, a maximum available thrust, illustrating the maximum thrust that the engines (3A, 3B) of the aircraft (A) are able to provide at said airport at said actual outside air temperature.

9. The device as claimed in one of claims 7 and 8,
   **characterized in that** it additionally comprises sixth means (13) for presenting a pilot of the aircraft (A) at least on a display screen (15) with at least the overall minimum flexible temperature determined by said fourth means (8).

10. The device as claimed in any one of claims 7 to 9,
    **characterized in that** the second and third means associated with at least one of said engines form part of an engine control unit (16A, 16B, 16n) used to set said engine (3A, 3B).

11. An aircraft fitted with a number of engines (3A, 3B),
    **characterized in that** it comprises a device (1) like the one specified in any one of claims 7 to 10.

**Patentansprüche**

1. Verfahren, um einem Piloten eines Luftfahrzeugs (A), das mit einer Mehrzahl von Motoren (3A, 3B) ausgestattet ist, Informationen über die Motoren (3A, 3B) des Luftfahrzeugs (A) zu liefern,
   **dadurch gekennzeichnet, dass**

   a) die effektive Höhe und die effektive Außentemperatur eines Flughafens bestimmt wird, auf dem sich das Luftfahrzeug (A) befindet;
   b) für jeden der Motoren (3A, 3B) des Luftfahrzeugs (A) mit Hilfe der effektiven Höhe und der effektiven Außentemperatur eine Umgebungstemperaturgrenze bestimmt wird, bei der der Motor (3A, 3B) einen vorbestimmten maximalen Schub liefert, wenn er mit einem vorbestimmten Abgastemperatur-Grenzwert arbeitet;
   c) wenn die Umgebungstemperaturgrenze niedriger als die Temperatur eines Knickpunkts und niedriger als die Außentemperatur ist, für jeden der Motoren (3A, 3B) des Luftfahrzeugs eine individuelle flexible Mindesttemperatur T1 bestimmt wird, und zwar mit Hilfe des folgenden Ausdrucks:

$$T1 = T2 + T3 - T4$$

wobei:

- T2 die effektive Außentemperatur ist, die im Schritt a) bestimmt wurde;
- T3 die Temperatur des Knickpunkts ist; und
- T4 die Umgebungstemperaturgrenze ist, die im Schritt b) bestimmt wurde; und

d) ausgehend von den individuellen flexiblen Mindesttemperaturen, die auf diese Weise für alle Motoren (3A, 3B) des Luftfahrzeugs (A) bestimmt wurden, eine globale flexible Mindesttemperatur bestimmt wird.

2. Verfahren nach Anspruch 1,
**dadurch gekennzeichnet, dass** in einem zusätzlichen Schritt ausgehend von der globalen flexiblen Mindesttemperatur, die im Schritt d) bestimmt wurde, ein verfügbarer maximaler Schub bestimmt wird, der den maximalen Schub illustriert, den die Motoren (3A, 3B) des Luftfahrzeugs (A) im Bereich des Flughafens bei der effektiven Außentemperatur liefern können.

3. Verfahren nach einem der Ansprüche 1 und 2,
**dadurch gekennzeichnet, dass** in einem zusätzlichen Schritt einem Piloten des Luftfahrzeugs (A) auf mindestens einem Anzeigebildschirm (15) mindestens die globale flexible Mindesttemperatur präsentiert wird, die im Schritt d) bestimmt wurde.

4. Verfahren nach einem der vorhergehenden Ansprüche,
**dadurch gekennzeichnet, dass** in einem zusätzlichen Schritt:

- die globale flexible Mindesttemperatur, die im Schritt d) bestimmt wurde, mit einer fiktiven flexiblen Mindesttemperatur verglichen wird, die von einem Piloten des Luftfahrzeugs (A) zur Steuerung der Motoren (3A, 3B) des Luftfahrzeugs (A) ausgewählt wurde; und
- überprüft wird, ob diese flexible Temperatur über der globalen flexiblen Mindesttemperatur bleibt.

5. Verfahren nach einem der vorhergehenden Ansprüche,
**dadurch gekennzeichnet, dass** im Schritt b) für jeden der Motoren (3A, 3B) des Luftfahrzeugs (A) die Umgebungstemperaturgrenze als fiktive Außentemperatur festgelegt wird, bei der bei maximalem Schub die Abgastemperatur gleich ihrem Grenzwert ist.

6. Verfahren nach einem der vorhergehenden Ansprüche,
**dadurch gekennzeichnet, dass** im Schritt d) zur Bestimmung der globalen flexiblen Mindesttemperatur:

- die verschiedenen individuellen flexiblen Mindesttemperaturen miteinander verglichen werden; und
- als globale flexible Mindesttemperatur die höchste individuelle flexible Mindesttemperatur ausgewählt wird.

7. Vorrichtung, um einem Piloten eines Luftfahrzeugs (A), das mit einer Mehrzahl von Motoren (3A, 3B) ausgestattet ist, Informationen über die Motoren (3A, 3B) des Luftfahrzeugs (A) zu liefern,
**dadurch gekennzeichnet, dass** sie umfasst:

- erste Mittel (2) zur Bestimmung der effektiven Höhe und der effektiven Außentemperatur eines Flughafens, auf dem sich das Luftfahrzeug (A) befindet;
- eine Vielzahl zweiter Mittel (4A, 4B, 4n), wobei jedes derart ausgebildet ist, dass es für einen der Motoren (3A, 3B) des Luftfahrzeugs (A), dem es zugeordnet ist, mit Hilfe der effektiven Höhe und der effektiven Außentemperatur eine Umgebungstemperaturgrenze bestimmt, bei der der Motor (3A, 3B) einen vorbestimmten maximalen Schub liefert, wenn er mit einem vorbestimmten Abgastemperatur-Grenzwert arbeitet;
- eine Vielzahl dritter Mittel (6A, 6B, 6n), wobei jedes derart ausgebildet ist, dass es für einen der Motoren (3A, 3B), dem es zugeordnet ist, wenn die Umgebungstemperaturgrenze niedriger als die Temperatur eines Knickpunkts und niedriger als die Außentemperatur ist, eine individuelle flexible Mindesttemperatur T1 bestimmt, und zwar mit Hilfe des folgenden Ausdrucks:

$$T1 = T2 + T3 - T4$$

wobei:

- T2 die effektive Außentemperatur ist;
- T3 die Temperatur des Knickpunkts ist; und
- T4 die Umgebungstemperaturgrenze ist; und

- vierte Mittel (8), um ausgehend von den individuellen flexiblen Mindesttemperaturen, die auf diese Weise für alle Motoren (3A, 3B) des Luftfahrzeugs (A) bestimmt wurden, eine globale flexible Mindesttemperatur zu bestimmen.

8. Vorrichtung nach Anspruch 7,
   **dadurch gekennzeichnet, dass** sie darüber hinaus fünfte Mittel (10) umfasst, um mit Hilfe der globalen flexiblen Mindesttemperatur einen verfügbaren maximalen Schub zu bestimmen, der den maximalen Schub illustriert, den die Motoren (3A, 3B) des Luftfahrzeugs (A) im Bereich des Flughafens bei der effektiven Außentemperatur liefern können.

9. Vorrichtung nach einem der Ansprüche 7 und 8,
   **dadurch gekennzeichnet, dass** sie darüber hinaus sechste Mittel (13) umfasst, um einem Piloten des Luftfahrzeugs (A) auf mindestens einem Anzeigebildschirm (15) mindestens die globale flexible Mindesttemperatur zu präsentieren, die durch die vierten Mittel (8) bestimmt wurde.

10. Vorrichtung nach einem der Ansprüche 7 bis 9,
    **dadurch gekennzeichnet, dass** die zweiten und dritten Mittel, die mindestens einem der Motoren zugeordnet sind, Teil einer Steuereinheit (16A, 16B, 16n) des Motors (3A, 3B) sind.

11. Luftfahrzeug, das mit einer Mehrzahl an Motoren (3A, 3B) ausgestattet ist,
    **dadurch gekennzeichnet, dass** es eine Vorrichtung (1) umfasst, wie sie in einem der Ansprüche 7 bis 10 spezifiziert wurde.

Fig. 1

Fig. 2

EP 1 937 555 B1

**EP 1 937 555 B1**

## RÉFÉRENCES CITÉES DANS LA DESCRIPTION

**Documents brevets cités dans la description**

- US 20040267414 A
- US 3721120 A
- US 5142860 A